# EUROPÄISCHE PATENTSCHRIFT

(11) **EP 3 899 457 B1**
(45) Veröffentlichungstag und Bekanntmachung des Hinweises auf die Patenterteilung: **21.08.2024**
(21) Anmeldenummer: 19832041.8
(22) Anmeldetag: 16.12.2019
(51) Int. Cl.: G01G 19/56

(54) **LEBENSMITTELZUBEREITUNGSSYSTEM**
FOOD PREPARING SYSTEM
SYSTÈME DE PRÉPARATION DE COMESTIBLES

(30) Priorität: 17.12.2018 ES 201831231
(43) Veröffentlichungstag der Anmeldung: 27.10.2021
(73) Patentinhaber: BSH Hausgeräte GmbH, 81739 München (DE)
(72) Erfinder: LASOBRAS BERNAD, Javier, 50016 EJEA DE LOS CABALLEROS (ZARAGOZA) (ES); LLORENTE GIL, Sergio, 50009 Zaragoza (ES)
(86) Internationale Anmeldenummer: PCT/EP2019/085426
(87) Internationale Veröffentlichungsnummer: WO 2020/127101

(56) Entgegenhaltungen:
- WO-A1-2017/085676
- CN-U- 204 541 731
- JP-A- 2017 136 474
- JP-A- H04 240 421

## Beschreibung

Die Erfindung betrifft ein Lebensmittelzubereitungssystem nach dem Oberbegriff des Anspruchs 1.

Aus dem Stand der Technik ist bereits ein Lebensmittelzubereitungssystem bekannt, welches ein Gargeschirr aufweist. Das Gargeschirr begrenzt einen Lebensmittelaufnahmeraum zu einer Aufnahme eines Lebensmittels. Eine Detektion eines Gewichts des Lebensmittels muss ein Bediener manuell vornehmen. Beispielsweise könnte der Bediener das Gewicht des Lebensmittels manuell durch Wiegen des leeren Gargeschirrs einerseits und andererseits des gefüllten Gargeschirrs, also des Gargeschirrs samt dem in dem Lebensmittelaufnahmeraum angeordneten Lebensmittel, ermitteln. Alternativ oder zusätzlich könnte der Bediener das Gewicht des Lebensmittels manuell durch Wiegen des Lebensmittels vor einem Einbringen in den Lebensmittelaufnahmeraum ermitteln. Nachteilig an beiden genannten Methoden ist, dass eventuelle Gewichtsveränderungen bei einem Zubereitungsprozess des Lebensmittels unberücksichtigt bleiben.

In der JP 2017 136 474 A ist ein Lebensmittelzubereitungssystem mit einem Gargeschirr und einem als Gargerät ausgebildeten Reiskocher mit Induktionsheizung beschrieben. Der Reiskocher umfasst eine in dem Gehäuse des Reiskochers angeordnete Sensoreinheit.

Die WO 2017 / 085 676 A1 offenbart ein Lebensmittelzubereitungssystem mit einem Gargeschirr, welches zu einer Beheizung flexibel in ein Gargerät einsetzbar und herausnehmbar ist. Das Gargerät umfasst eine Trägereinheit, in der eine Sensoreinheit zur Detektion einer Gewichtskenngröße angeordnet ist.

Aus der JP H04 240 421 A ist ein Reiskochsystem mit einem Gargeschirr bekannt, wobei das Reiskochsystem innerhalb eines Schrankkörpers verbaut ist, der als Reiswasch- und Reiskoch-Vorrichtung ausgebildet ist und bei dem ein Gargerät mit einer Sensoreinheit zur Messung des Reisgewichts und Dosieren des benötigten Kochwassers vorgesehen ist.

Die CN 204 541 731 U offenbart ein Lebensmittelkochsystem mit einem Gargeschirr und einem Gargerät, wobei an dem Gargerät eine Sensoreinheit angeordnet ist, welche bei einem Einhängen des Gargeschirrs in das Gargerät aktiviert wird.

Von der Firma Vorwerk AG sind die Produkte Thermomix^{®} TM5 und Thermomix^{®} TM31 bekannt, bei denen es sich jeweils um ein Lebensmittelkochsystem handelt und die jeweils zahlreiche Funktionen aufweisen, unter anderem auch eine Wiege-Funktion.

Die Aufgabe der Erfindung besteht insbesondere darin, ein gattungsgemäßes System mit verbesserten Eigenschaften hinsichtlich eines Bedienkomforts bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einem Lebensmittelzubereitungssystem, insbesondere von einem Kochsystem, mit zumindest einem Gargeschirr, welches zumindest einen Lebensmittelaufnahmeraum zu einer Aufnahme zumindest eines Lebensmittels wenigstens teilweise begrenzt und/oder definiert.

Es wird vorgeschlagen, dass das Gargeschirr zumindest eine Sensoreinheit aufweist, welche zu einer Detektion zumindest einer Gewichtskenngröße, insbesondere des Lebensmittels, vorgesehen ist.

Durch die erfindungsgemäße Ausgestaltung kann insbesondere ein hoher Bedienkomfort erreicht werden. Insbesondere kann eine einfache Zubereitung des Lebensmittels ermöglicht werden, da einem Bediener beispielsweise ein manuelles Wiegen des Lebensmittels und/oder zumindest einer Zutat abgenommen werden kann. Ein Gewicht des Lebensmittels kann insbesondere in regelmäßigen Abständen, insbesondere während eines Zubereitungsprozesses, vorteilhaft automatisch, kontrolliert und/oder detektiert werden, wodurch insbesondere auf, insbesondere ungewollte, Gewichtsveränderungen des Lebensmittels schnell reagiert werden kann. Hierdurch könnte beispielsweise ein Leerkochen des Gargeschirrs vermieden werden.

Unter einem "Lebensmittelzubereitungssystem" soll insbesondere ein System verstanden werden, welches zumindest eine Funktionseinheit aufweist, deren Hauptfunktion eine Zubereitung zumindest eines Lebensmittels und/oder zumindest eines Produkts ist, und welches insbesondere zusätzlich zumindest eine weitere Funktionseinheit aufweisen könnte, deren Hauptfunktion von einer Zubereitung zumindest eines Lebensmittels und/oder zumindest eines Produkts abweicht. Beispielsweise könnte die Funktionseinheit, deren Hauptfunktion insbesondere eine Zubereitung zumindest eines Lebensmittels und/oder zumindest eines Produkts ist, ein Gargerät und vorteilhaft ein Kochfeld sein. Alternativ oder zusätzlich könnte die Funktionseinheit, deren Hauptfunktion insbesondere eine Zubereitung zumindest eines Lebensmittels und/oder zumindest eines Produkts ist, insbesondere Teil eines Gargeräts und vorteilhaft eines Kochfelds sein. In wenigstens einem Betriebszustand erhitzt und/oder erwärmt und/oder gart die Funktionseinheit insbesondere zumindest ein Lebensmittel und/oder zumindest ein Produkt, und zwar insbesondere zum Zweck einer Zubereitung des Lebensmittels und/oder des Produkts.

Insbesondere führt die Funktionseinheit in wenigstens einem Betriebszustand zumindest eine Gargerätehauptfunktion und vorteilhaft zumindest eine Kochfeldhauptfunktion aus. Insbesondere ist die Funktionseinheit Teil eines Gargeräts und vorteilhaft eines Kochfelds und führt in wenigstens einem Betriebszustand insbesondere zumindest eine Gargerätehauptfunktion des Gargeräts und vorteilhaft zumindest eine Kochfeldhauptfunktion des Kochfelds aus. Die Funktionseinheit könnte beispielsweise in wenigstens einem Betriebszustand zumindest eine Heizfunktion und/oder zumindest eine Garfunktion und/oder zumindest eine Kochfunktion ausführen.

Die weitere Funktionseinheit, deren Hauptfunktion insbesondere von einer Zubereitung zumindest eines Lebensmittels und/oder zumindest eines Produkts abweicht, könnte beispielsweise wenigstens teilweise in zumindest einem Mobilgerät und/oder in zumindest einem Haushaltsgerät, insbesondere in zumindest einem Kältegerät und/oder in zumindest einem Skalierungsgerät und/oder in zumindest einem Bearbeitungsgerät und/oder in zumindest einem Behandlungsgerät, integriert sein. Das Skalierungsgerät könnte insbesondere eine Waage, insbesondere eine Küchenwaage, sein. Das Bearbeitungsgerät könnte insbesondere eine Knetmaschine und/oder eine Teigmaschine und/oder ein Mixer und/oder eine Rührmaschine sein.

Die weitere Funktionseinheit könnte beispielsweise in wenigstens einem Betriebszustand zumindest eine Kühlungsfunktion und/oder zumindest eine Gefrierfunktion und/oder zumindest eine Bearbeitungsfunktion und/oder zumindest eine Behandlungsfunktion und/oder zumindest eine Skalierungsfunktion und/oder zumindest eine Reinigungsfunktion und/oder zumindest eine Trocknungsfunktion ausführen.

Insbesondere weist das Lebensmittelzubereitungssystem zumindest ein Gargerät und vorteilhaft zumindest ein Kochfeld auf. Das Gargeschirr ist insbesondere zu einer Beheizung durch das Gargerät und/oder durch das Kochfeld vorgesehen. Insbesondere ist das Gargerät und/oder das Kochfeld dazu vorgesehen, das Gargeschirr, insbesondere unabhängig von einer Positionierung des Gargeschirrs an dem Gargerät und/oder an dem Kochfeld, zu beheizen.

Das Lebensmittelzubereitungssystem weist insbesondere zumindest eine Geräteplatte auf, welche in wenigstens einem Betriebszustand insbesondere zumindest eine Sichtfläche, insbesondere des Gargeräts, und/oder eine einem Bediener zugewandte Außenseite, insbesondere des Gargeräts, definiert. Beispielsweise könnte die Geräteplatte wenigstens zu einem Großteil in zumindest einer Tür, insbesondere in zumindest einer Backofentür und/oder insbesondere in zumindest einer Gargerätetür, vorteilhaft des Gargeräts, integriert sein. Vorteilhaft könnte die Geräteplatte zumindest eine Aufstellplatte und/oder zumindest eine Kochfeldplatte aufweisen und insbesondere als Aufstellplatte und/oder als Kochfeldplatte ausgebildet sein. Die Geräteplatte ist insbesondere zu einem Aufstellen des Gargeschirrs, insbesondere zum Zweck einer Beheizung des Gargeschirrs durch das Gargerät und/oder durch das Kochfeld vorgesehen.

Das Gargeschirr ist insbesondere zu einem Aufstellen auf dem Kochfeld vorgesehen, und zwar insbesondere an einer beliebigen Position einer Kochfläche des Kochfelds. Insbesondere weist das Gargeschirr zumindest einen Gargeschirrgrundkörper auf, welcher den Lebensmittelaufnahmeraum insbesondere wenigstens teilweise begrenzt. Das Gargeschirr weist insbesondere zumindest einen Gargeschirrdeckel auf, welcher insbesondere dem Gargeschirrgrundkörper zugeordnet ist und welcher insbesondere in wenigstens einem Betriebszustand den Lebensmittelaufnahmeraum wenigstens teilweise begrenzt. In wenigstens einem Betriebszustand begrenzt das Gargeschirr, insbesondere der Gargeschirrgrundkörper und der dem Gargeschirrgrundkörper zugeordnete Gargeschirrdeckel, den Lebensmittelaufnahmeraum insbesondere wenigstens zu einem Großteil, vorteilhaft wenigstens im Wesentlichen und besonders vorteilhaft vollständig.

Unter der Wendung, dass ein Objekt, insbesondere das Gargeschirr, vorteilhaft der Gargeschirrgrundkörper und/oder der Gargeschirrdeckel, einen Lebensmittelaufnahmeraum "wenigstens teilweise" begrenzt, soll insbesondere verstanden werden, dass das Objekt den Lebensmittelaufnahmeraum alleine oder gemeinsam mit zumindest einem weiteren Objekt, insbesondere dem Gargeschirrdeckel und/oder dem Gargeschirrgrundkörper, begrenzt. Unter "wenigstens zu einem Großteil" soll insbesondere zu einem Anteil, insbesondere einem Massenanteil und/oder einem Volumenanteil und/oder einem Anteil einer Anzahl, von mindestens 70 %, insbesondere von mindestens 80 %, vorteilhaft von mindestens 90 % und vorzugsweise von mindestens 95 % verstanden werden.

Insbesondere weist das Gargeschirr zumindest einen Gargeschirrboden auf, welcher insbesondere wenigstens zu einem Großteil und vorteilhaft vollständig von dem Gargeschirrgrundkörper definiert und/oder ausgebildet ist. Der Gargeschirrboden ist insbesondere Teil des Gargeschirrgrundkörpers.

Unter einer "Sensoreinheit" soll insbesondere eine Einheit verstanden werden, welche zumindest ein Sensorelement mit zumindest einem Detektor zu einer Detektion wenigstens einer Sensorkenngröße, insbesondere wenigstens der Gewichtskenngröße, aufweist und welche insbesondere dazu vorgesehen ist, einen die Sensorkenngröße, insbesondere die Gewichtskenngröße, kennzeichnenden Wert auszugeben, wobei es sich bei der Sensorkenngröße vorteilhaft um eine physikalische und/oder chemische Größe handelt. Beispielsweise könnte die Sensoreinheit die Sensorkenngröße in wenigstens einem Betriebszustand aktiv detektieren, wie insbesondere durch Erzeugen und Aussenden eines Messsignals, insbesondere eines elektrischen und/oder optischen Messsignals. Alternativ oder zusätzlich könnte die Sensoreinheit die Sensorkenngröße in wenigstens einem Betriebszustand passiv detektieren, wie insbesondere durch eine Erfassung von zumindest einer Eigenschaftsänderung zumindest eines Sensorbauteils und/oder des Detektors. Vorteilhaft weist die Sensorkenngröße zumindest die Gewichtskenngröße auf. Insbesondere zusätzlich könnte die Sensorkenngröße zumindest eine weitere Detektionskenngröße aufweisen.

Beispielsweise könnte die Sensoreinheit in wenigstens einem Betriebszustand die Gewichtskenngröße des gesamten Gargeschirrs, insbesondere des Gargeschirrs sowie des in dem Lebensmittelaufnahmeraum befindlichen Lebensmittels, detektieren. Alternativ oder zusätzlich könnte die Sensoreinheit in wenigstens einem Betriebszustand vorteilhaft die Gewichtskenngröße des, insbesondere in dem Lebensmittelaufnahmeraum befindlichen, Lebensmittels detektieren.

Insbesondere weist zumindest ein, insbesondere zumindest das, Sensorelement der Sensoreinheit zumindest einen ersten elektrischen Kontakt und zumindest einen zweiten elektrischen Kontakt auf. Vorteilhaft weisen zumindest zwei der, insbesondere wenigstens ein Großteil der und vorteilhaft alle der, Sensorelemente der Sensoreinheit, insbesondere jeweils zumindest einen ersten elektrischen Kontakt und zumindest einen zweiten elektrischen Kontakt auf.

Insbesondere weist die Sensoreinheit zumindest ein Sensorelement auf, welches insbesondere zumindest einen Detektor aufweist und insbesondere mittels des Detektors zu einer Detektion wenigstens einer Sensorkenngröße, insbesondere wenigstens der Gewichtskenngröße, vorgesehen ist. Vorteilhaft weist die Sensoreinheit, insbesondere insgesamt, zumindest zwei, insbesondere zumindest vier, vorteilhaft zumindest sechs und vorzugsweise zumindest acht Sensorelemente auf.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Sensoreinheit zumindest ein erstes Sensorelement und zumindest ein zweites Sensorelement aufweist, welche jeweils zu der wenigstens teilweisen Detektion der Gewichtskenngröße, insbesondere des Lebensmittels, vorgesehen sind. Unter der Wendung, dass zumindest zwei Sensorelemente der Sensoreinheit jeweils zu der "wenigstens teilweisen" Detektion der Gewichtskenngröße vorgesehen sind, soll insbesondere verstanden werden, dass die Sensorelemente in wenigstens einem Betriebszustand die Gewichtskenngröße alleine oder gemeinsam mit zumindest einem, insbesondere von den Sensorelementen verschiedenen, weiteren Sensorelement detektieren. Insbesondere wirken die Sensorelemente, insbesondere zumindest das erste Sensorelement und das zweite Sensorelement, in wenigstens einem Betriebszustand bei der Detektion der Gewichtskenngröße zumindest mit. Vorteilhaft wirken in wenigstens einem Betriebszustand bei der Detektion der Gewichtskenngröße wenigstens ein Großteil der und vorzugsweise alle der Sensorelemente zusammen und detektieren in dem Betriebszustand insbesondere gemeinsam die Gewichtskenngröße. Unter der Wendung "wenigstens ein Großteil" soll insbesondere zu einem Anteil, insbesondere ein Massenanteil und/oder ein Volumenanteil und/oder ein Anteil einer Anzahl, von mindestens 70 %, insbesondere von mindestens 80 %, vorteilhaft von mindestens 90 % und vorzugsweise von mindestens 95 % verstanden werden. Dadurch kann insbesondere eine hohe Detektionsgenauigkeit ermöglicht werden.

Zudem wird vorgeschlagen, dass die Sensoreinheit zumindest eine Brückenschaltung aufweist, in welcher die Sensorelemente, insbesondere zumindest das erste Sensorelement und das zweite Sensorelement, angeordnet sind. Beispielsweise könnte die Sensoreinheit zumindest eine als Halbbrückenschaltung ausgebildete und/oder bezeichnete Brückenschaltung aufweisen. Die Sensoreinheit könnte beispielsweise zumindest eine als Vollbrückenschaltung ausgebildete und/oder bezeichnete Brückenschaltung aufweisen. Vorzugsweise weist die Sensoreinheit zumindest eine als Wheatstone'sche Brückenschaltung ausgebildete und/oder bezeichnete Brückenschaltung auf. Dadurch kann die Gewichtskenngröße insbesondere besonders genau detektiert werden, wodurch insbesondere ein hoher Bedienkomfort, insbesondere für einen Bediener, erzielt werden kann.

Beispielsweise könnten das erste Sensorelement und das zweite Sensorelement in dem gleichen, insbesondere in ein und demselben, Brückenzweig der Brückenschaltung angeordnet sein. Vorzugsweise sind das erste Sensorelement und das zweite Sensorelement in verschiedenen Brückenzweigen der Brückenschaltung angeordnet. Dadurch kann insbesondere eine besonders hohe Detektionsgenauigkeit erreicht werden.

Ferner wird vorgeschlagen, dass die Sensoreinheit, insbesondere zusätzlich zu dem ersten Sensorelement und dem zweiten Sensorelement, zumindest ein drittes Sensorelement und zumindest ein viertes Sensorelement aufweist, welche jeweils zu der wenigstens teilweisen Detektion der Gewichtskenngröße, insbesondere des Lebensmittels, vorgesehen sind. Die Sensoreinheit weist insbesondere zumindest ein fünftes Sensorelement und vorteilhaft zumindest ein sechstes Sensorelement auf, welche jeweils zu der wenigstens teilweisen Detektion der Gewichtskenngröße, insbesondere des Lebensmittels, vorgesehen sind. Insbesondere weist die Sensoreinheit zumindest ein siebtes Sensorelement und vorteilhaft zumindest ein achtes Sensorelement auf, welche jeweils zu der wenigstens teilweisen Detektion der Gewichtskenngröße, insbesondere des Lebensmittels, vorgesehen sind. Dadurch kann insbesondere ein hoher Bedienkomfort, insbesondere für einen Bediener, und/oder zumindest eine sehr präzise und/oder zuverlässige Detektion der Gewichtskenngröße ermöglicht werden.

Das erste Sensorelement und das vierte Sensorelement könnten beispielsweise in demselben Brückenzweig der Brückenschaltung angeordnet sein. Das zweite Sensorelement und das dritte Sensorelement könnten beispielsweise in demselben Brückenzweig der Brückenschaltung angeordnet sein. Vorzugsweise sind das erste Sensorelement und das dritte Sensorelement in demselben Brückenzweig der Brückenschaltung angeordnet. Insbesondere sind das zweite Sensorelement und das vierte Sensorelement in demselben Brückenzweig der Brückenschaltung angeordnet. Dadurch kann die Gewichtskenngröße insbesondere besonders genau detektiert und/oder ein hoher Bedienkomfort, insbesondere für einen Bediener, erzielt werden.

Zumindest zwei der, insbesondere wenigstens ein Großteil der und vorteilhaft alle der Sensorelemente könnten sich, insbesondere jeweils, beispielsweise in zumindest einem Merkmal unterscheiden. Vorzugsweise sind die Sensorelemente, insbesondere das erste Sensorelement und/oder das zweite Sensorelement und/oder das dritte Sensorelement und/oder das vierte Sensorelement und/oder das fünfte Sensorelement und/oder das sechste Sensorelement und/oder das siebte Sensorelement und/oder das achte Sensorelement, wenigstens zu einem Großteil und vorteilhaft vollständig identisch ausgebildet. Dadurch kann insbesondere eine geringe Lagerhaltung und/oder eine geringe Bauteilevielfalt erreicht werden, wodurch insbesondere geringe Kosten und/oder eine preisgünstige Herstellung des Gargeschirrs und/oder der Sensoreinheit erzielt werden können/kann.

Zumindest eines der, insbesondere wenigstens ein Großteil der und vorteilhaft alle der Sensorelemente, insbesondere das erste Sensorelement und/oder das zweite Sensorelement und/oder das dritte Sensorelement und/oder das vierte Sensorelement und/oder das fünfte Sensorelement und/oder das sechste Sensorelement und/oder das siebte Sensorelement und/oder das achte Sensorelement, könnten beispielsweise zumindest einen Widerstandssensor aufweisen und/oder als Widerstandssensor ausgebildet sein und insbesondere in Abhängigkeit zumindest einer auf das jeweilige Sensorelement einwirkenden Kraft, welche insbesondere durch das in dem Lebensmittelaufnahmeraum befindliche Lebensmittel hervorgerufen sein könnte, zumindest einen Widerstand verändern, wodurch sich insbesondere zumindest eine an zumindest einem Messkontakt abfallende Spannung verändern könnte. In wenigstens einem Betriebszustand könnten insbesondere in Abhängigkeit zumindest einer auf das jeweilige Sensorelement einwirkenden Kraft, welche insbesondere durch das in dem Lebensmittelaufnahmeraum befindliche Lebensmittel hervorgerufen sein könnte, zumindest zwei der Sensorelemente ihren jeweiligen Widerstand erhöhen und zumindest zwei der Sensorelemente ihren jeweiligen Widerstand verringern. Diese Widerstandsänderung könnte insbesondere ein Ungleichgewicht in der Brückenschaltung hervorrufen, wodurch insbesondere an zumindest einem Messkontakt zumindest eine Spannung abfallen könnte, welche abhängig von der einwirkenden Kraft und damit insbesondere von einem Gewicht des in dem Lebensmittelaufnahmeraum befindlichen Lebensmittels sein könnte.

Ferner wird vorgeschlagen, dass zumindest eines der, insbesondere wenigstens ein Großteil der und vorteilhaft alle der Sensorelemente, insbesondere das erste Sensorelement und/oder das zweite Sensorelement und/oder das dritte Sensorelement und/oder das vierte Sensorelement und/oder das fünfte Sensorelement und/oder das sechste Sensorelement und/oder das siebte Sensorelement und/oder das achte Sensorelement, zumindest einen Dehnungsmessstreifen aufweisen. Dadurch kann insbesondere eine preisgünstige Ausgestaltung erzielt werden.

Beispielsweise könnten wenigstens ein Großteil der und vorteilhaft alle der Sensorelemente wenigstens im Wesentlichen in demselben Abstand zueinander angeordnet sein. Insbesondere könnte ein Abstand zweier einander nächstgelegener Sensorelemente, insbesondere unabhängig von einer Nummerierung der Sensorelemente, wenigstens im Wesentlichen identisch sein. Vorzugsweise wird vorgeschlagen, dass zumindest zwei der Sensorelemente, insbesondere das erste Sensorelement und das zweite Sensorelement, zumindest eine, insbesondere erste, Messeinheit der Sensoreinheit bilden und in gegenseitigem Abstand von maximal 10 cm, insbesondere von maximal 8 cm, vorteilhaft von maximal 6 cm, besonders vorteilhaft von maximal 4 cm, vorzugsweise von maximal 2 cm und besonders bevorzugt von maximal 1 cm angeordnet sind. Insbesondere ist zumindest ein, insbesondere von dem ersten Sensorelement und dem zweiten Sensorelement verschiedenes, weiteres Sensorelement, insbesondere das dritte Sensorelement und/oder das vierte Sensorelement, zu der Messeinheit, insbesondere zu dem ersten Sensorelement und/oder zu dem zweiten Sensorelement, in gegenseitigem Abstand von mindestens 11 cm, insbesondere von mindestens 12 cm, vorteilhaft von mindestens 14 cm, besonders vorteilhaft von mindestens 16 cm, vorzugsweise von mindestens 18 cm und besonders bevorzugt von mindestens 20 cm angeordnet. Dadurch kann insbesondere eine kompakte Ausgestaltung ermöglicht werden.

Weiterhin wird vorgeschlagen, dass die Sensoreinheit zumindest eine Sensorgehäuseeinheit aufweist, in welcher die Messeinheit wenigstens zu einem Großteil integriert ist. Unter einer "Sensorgehäuseeinheit" soll insbesondere eine Einheit verstanden werden, welche in wenigstens einem montierten Zustand zumindest einen, insbesondere als Hohlraum ausgebildeten, Aufnahmeraum zu einer Aufnahme und/oder zu einer Lagerung zumindest der Messeinheit wenigstens teilweise begrenzt und/oder definiert. In wenigstens einem montierten Zustand könnte die Sensorgehäuseeinheit die Messeinheit, insbesondere bezüglich eines Massenschwerpunkts und/oder Volumenschwerpunkts der Messeinheit, insbesondere in zumindest einer, insbesondere beliebigen, Ebene über einen Winkelbereich von mindestens 90 °, insbesondere von mindestens 180 °, vorteilhaft von mindestens 270 °, besonders vorteilhaft von mindestens 300 °, vorzugsweise von mindestens 330 ° und besonders bevorzugt von mindestens 355 ° umgeben. Die Messeinheit ist insbesondere zu der wenigstens teilweisen Detektion der Gewichtskenngröße vorgesehen, und zwar insbesondere mittels des ersten Sensorelements und mittels des zweiten Sensorelements. Dadurch kann die Messeinheit insbesondere besonders geschützt angeordnet werden, wodurch insbesondere eine langlebige Ausgestaltung und/oder ein geringes Risiko einer Beschädigung der Messeinheit erreicht werden kann.

Die Sensorgehäuseeinheit könnte in wenigstens einem montierten Zustand insbesondere an dem Gargeschirr, vorteilhaft an dem Gargeschirrboden des Gargeschirrs, angeordnet und/oder befestigt sein. Alternativ oder zusätzlich könnte die Sensorgehäuseeinheit in wenigstens einem montierten Zustand insbesondere wenigstens teilweise in dem Gargeschirr, vorteilhaft in dem Gargeschirrboden des Gargeschirrs, integriert sein. Dadurch kann insbesondere eine hohe Stabilität erzielt werden.

Insbesondere in wenigstens einem Betriebszustand lagert die Sensorgehäuseeinheit das Gargeschirr, insbesondere den Gargeschirrboden des Gargeschirrs, beabstandet zu der Geräteplatte. In wenigstens einem Betriebszustand lagert die Sensorgehäuseeinheit das Gargeschirr, insbesondere den Gargeschirrboden des Gargeschirrs, in einem Abstand von mindestens 0,05 mm, insbesondere von mindestens 0,1 mm, vorteilhaft von mindestens 0,2 mm, besonders vorteilhaft von mindestens 0,3 mm, vorzugsweise von mindestens 0,4 mm und besonders bevorzugt von mindestens 0,5 mm zu der Geräteplatte. Insbesondere lagert die Sensorgehäuseeinheit das Gargeschirr, insbesondere den Gargeschirrboden des Gargeschirrs, in wenigstens einem Betriebszustand in einem Abstand von maximal 10 mm, insbesondere von maximal 7 mm, vorteilhaft von maximal 5 mm, besonders vorteilhaft von maximal 4 mm, vorzugsweise von maximal 3 mm und besonders bevorzugt von maximal 2 mm zu der Geräteplatte. Dadurch kann insbesondere ein optimaler Kompromiss zwischen einer hohen Detektionsgenauigkeit der Gewichtskenngröße und einer optimierten Beheizung des Gargeschirrs, insbesondere des Gargeschirrbodens des Gargeschirrs, ermöglicht werden. Insbesondere kann eine optimale Eignung zu einer induktiven Beheizung und/oder eine optimale Kompatibilität mit zumindest einem Induktionskochfeld ermöglicht werden.

Zudem wird vorgeschlagen, dass die Sensoreinheit zumindest eine Temperaturausgleichseinheit aufweist, welche dazu vorgesehen ist, bei der Detektion der Gewichtskenngröße zumindest einen Einfluss einer Temperatur, insbesondere wenigstens teilweise, vorteilhaft wenigstens zu einem Großteil und besonders vorteilhaft vollständig auszugleichen und/oder zu minimieren und/oder zu kompensieren, welcher insbesondere durch eine Beheizung des Gargeschirrs, insbesondere des Gargeschirrbodens des Gargeschirrs, hervorgerufen sein könnte. In wenigstens einem Betriebszustand könnte die Temperaturausgleichseinheit bei der Detektion der Gewichtskenngröße zumindest einen Einfluss einer Temperatur, insbesondere wenigstens teilweise, vorteilhaft wenigstens zu einem Großteil und besonders vorteilhaft vollständig ausgleichen und/oder minimieren und/oder kompensieren, und zwar insbesondere für zumindest eine und vorteilhaft für die Messeinheit der Sensoreinheit. Insbesondere weist die Sensoreinheit, insbesondere pro Messeinheit, zumindest eine Temperaturausgleichseinheit auf, welche insbesondere der Messeinheit zugeordnet ist und in wenigstens einem Betriebszustand bei der Detektion der Gewichtskenngröße insbesondere zumindest einen Einfluss einer Temperatur, insbesondere wenigstens teilweise, vorteilhaft wenigstens zu einem Großteil und besonders vorteilhaft vollständig ausgleicht und/oder minimiert und/oder kompensiert. Beispielsweise könnten die Messeinheit und die Temperaturausgleichseinheit insbesondere wenigstens teilweise einstückig und vorteilhaft einstückig ausgebildet sein. Darunter, dass zwei Einheiten "wenigstens teilweise" einstückig ausgebildet sind, soll insbesondere verstanden werden, dass die Einheiten zumindest ein, insbesondere zumindest zwei, vorteilhaft zumindest drei gemeinsame Elemente aufweisen, die Bestandteil, insbesondere funktionell wichtiger Bestandteil, beider Einheiten sind. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann insbesondere eine geringe Fehlerquote bei der Detektion der Gewichtskenngröße ermöglicht werden, da insbesondere Fehler aufgrund eines Temperatureinflusses minimiert werden können.

Weiterhin wird vorgeschlagen, dass die Temperaturausgleichseinheit zumindest zwei, insbesondere zueinander benachbarte und/oder einander nächstgelegene, Sensorelemente der Sensoreinheit, insbesondere das erste Sensorelement und das zweite Sensorelement, aufweist, welche entgegensetzt geschaltet und insbesondere in verschiedenen Brückenzweigen der Brückenschaltung angeordnet sind. An zumindest einem ersten Kontakt eines der Sensorelemente liegt in wenigstens einem Betriebszustand insbesondere eine andere Polung an als an zumindest einem ersten Kontakt eines weiteren der Sensorelemente. Insbesondere liegt in wenigstens einem Betriebszustand an zumindest einem zweiten Kontakt eines der Sensorelemente eine andere Polung an als an zumindest einem zweiten Kontakt eines weiteren der Sensorelemente. In wenigstens einem Betriebszustand ist eines der Sensorelemente, insbesondere bei Anwesenheit des Lebensmittels in dem Lebensmittelaufnahmeraum, insbesondere zumindest einer Tensionskraft, welche insbesondere durch das in dem Lebensmittelaufnahmeraum befindliche Lebensmittel hervorgerufen ist, ausgesetzt und dehnt sich, insbesondere in Abhängigkeit von der Tensionskraft, vorteilhaft wenigstens abschnittsweise, aus. Insbesondere ist in wenigstens einem Betriebszustand ist ein weiteres der Sensorelemente, insbesondere bei Anwesenheit des Lebensmittels in dem Lebensmittelaufnahmeraum, insbesondere zumindest einer Kompressionskraft, welche insbesondere durch das in dem Lebensmittelaufnahmeraum befindliche Lebensmittel hervorgerufen ist, ausgesetzt und zieht sich, insbesondere in Abhängigkeit von der Kompressionskraft, vorteilhaft wenigstens abschnittsweise, zusammen. Dadurch kann insbesondere auf konstruktiv einfache Weise der Einfluss der Temperatur ausgeglichen werden, wodurch insbesondere auf aufwändigere Maßnahmen verzichtet und/oder geringe Kosten erzielt werden können/kann.

In wenigstens einem Betriebszustand liegt an zumindest einem ersten Kontakt des ersten Sensorelements insbesondere eine andere Polung an als an zumindest einem ersten Kontakt des zweiten Sensorelements. Insbesondere liegt in wenigstens einem Betriebszustand an zumindest einem zweiten Kontakt des ersten Sensorelements eine andere Polung an als an zumindest einem zweiten Kontakt des zweiten Sensorelements. In wenigstens einem Betriebszustand ist das erste Sensorelement, insbesondere bei Anwesenheit des Lebensmittels in dem Lebensmittelaufnahmeraum, insbesondere zumindest einer Tensionskraft, welche insbesondere durch das in dem Lebensmittelaufnahmeraum befindliche Lebensmittel hervorgerufen ist, ausgesetzt und dehnt sich, insbesondere in Abhängigkeit von der Tensionskraft, vorteilhaft wenigstens abschnittsweise, aus. In wenigstens einem Betriebszustand ist das zweite Sensorelement, insbesondere bei Anwesenheit des Lebensmittels in dem Lebensmittelaufnahmeraum, insbesondere zumindest einer Kompressionskraft, welche insbesondere durch das in dem Lebensmittelaufnahmeraum befindliche Lebensmittel hervorgerufen ist, ausgesetzt und zieht sich, insbesondere in Abhängigkeit von der Kompressionskraft, vorteilhaft wenigstens abschnittsweise, zusammen.

Beispielsweise könnte die Sensoreinheit, insbesondere in wenigstens einem Betriebszustand, wenigstens teilweise an zumindest einem Gargeschirrboden des Gargeschirrs befestigt sein. Vorzugsweise ist die Sensoreinheit, insbesondere in wenigstens einem Betriebszustand, wenigstens teilweise in zumindest einem Gargeschirrboden des Gargeschirrs integriert. Unter der Wendung, dass ein Objekt, insbesondere die Sensoreinheit, "wenigstens teilweise" in zumindest einem weiteren Objekt, insbesondere in dem Gargeschirrboden des Gargeschirrs, integriert ist, soll insbesondere verstanden werden, dass zumindest ein Abschnitt des Objekts und/oder zumindest ein Teilbereich des Objekts in dem weiteren Objekt integriert ist und insbesondere zumindest ein weiterer Abschnitt des Objekts und/oder zumindest ein weiterer Teilbereich des Objekts außerhalb des weiteren Objekts angeordnet sein könnte. Dadurch kann insbesondere eine hohe Stabilität und/oder eine sichere Anordnung der Sensoreinheit und/oder eine geschützte Anordnung der Sensoreinheit erzielt werden.

Beispielsweise könnte das Lebensmittelzubereitungssystem zumindest eine Auswerteeinheit aufweisen, welche beispielsweise in einer Steuer- und/oder Regeleinheit des Gargeräts und vorteilhaft des Kochfelds, insbesondere wenigstens teilweise, vorteilhaft wenigstens zu einem Großteil und vorzugsweise vollständig integriert sein und insbesondere dazu vorgesehen sein könnte, zumindest eine Funktionseinheit des Gargeräts und vorteilhaft des Kochfelds, welche insbesondere zu einer Durchführung zumindest einer Gargerätehauptfunktion insbesondere des Gargeräts und vorteilhaft zumindest einer Kochfeldhauptfunktion insbesondere des Kochfelds vorgesehen sein könnte, zu steuern und/oder zu regeln. Vorzugsweise weist das Lebensmittelzubereitungssystem zumindest eine Auswerteeinheit auf, welche zu einer Auswertung der Gewichtskenngröße vorgesehen ist und welche insbesondere wenigstens teilweise und/oder wenigstens zu einem Großteil in zumindest einem Gargeschirrgriff des Gargeschirrs integriert ist. Unter einer "Auswerteeinheit" soll insbesondere eine elektronische Einheit verstanden werden, welche vorzugsweise zu einer Auswertung der Gewichtskenngröße vorgesehen ist. Insbesondere weist die Auswerteeinheit eine Recheneinheit und insbesondere zusätzlich zur Recheneinheit eine Speichereinheit mit einem darin gespeicherten Steuer- und/oder Regelprogramm auf, das dazu vorgesehen ist, von der Recheneinheit ausgeführt zu werden. Die Auswerteeinheit könnte, insbesondere zusätzlich, beispielsweise dazu vorgesehen sein, zumindest die Sensoreinheit zu steuern und/oder zu regeln. Dadurch kann die Auswerteeinheit insbesondere optimal positioniert und/oder ein geringer Einfluss einer Beheizung des Gargeschirrs, insbesondere des Gargeschirrbodens des Gargeschirrs, auf eine Funktionalität der Auswerteeinheit erreicht werden.

Weiterhin wird vorgeschlagen, dass das Gargeschirr zu einer induktiven Beheizung vorgesehen ist. Insbesondere könnte das Gargeschirr wenigstens teilweise und vorteilhaft wenigstens zu einem Großteil aus zumindest einem induktionsgeeigneten Material bestehen. Beispielsweise könnte das Gargeschirr wenigstens teilweise und vorteilhaft wenigstens zu einem Großteil aus zumindest einem ferrimagnetischen Material und/oder aus zumindest einem ferromagnetischen Material bestehen. Alternativ oder zusätzlich könnte das Gargeschirr insbesondere zumindest ein Element und/oder zumindest einen Teilbereich aufweisen, welches/welcher wenigstens zu einem Großteil aus zumindest einem induktionsgeeigneten Material, wie beispielsweise aus zumindest einem ferrimagnetischen Material und/oder aus zumindest einem ferromagnetischen Material, bestehen könnte. Das Element könnte beispielsweise zumindest ein Schichtelement, insbesondere zumindest ein Heizschichtelement, aufweisen. Der Teilbereich könnte beispielsweise zumindest einen Boden des Gargeschirrs, insbesondere den Boden des Gargeschirrs, aufweisen. Dadurch kann insbesondere eine energieeffiziente Beheizung des Gargeschirrs ermöglicht werden. Insbesondere kann das Gargeschirr trotz des Abstands zwischen der Geräteplatte und dem Boden des Gargeschirrs beheizt werden, und zwar insbesondere in effizienter und/oder zuverlässiger Weise.

Das Lebensmittelzubereitungssystem soll hierbei nicht auf die oben beschriebene Anwendung und Ausführungsform beschränkt sein. Insbesondere kann das Lebensmittelzubereitungssystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Lebensmittelzubereitungssystem mit einem Gargeschirr und mit einem Gargerät in einer schematischen Draufsicht,
- Fig. 2: einen Ausschnitt des Lebensmittelzubereitungssystems mit dem Gargeschirr und mit dem Gargerät in einer schematischen Schnittdarstellung,
- Fig. 3: einen Ausschnitt des Gargeschirrs in einer Blickrichtung auf einen Gargeschirrboden des Gargeschirrs in einer schematischen Darstellung,
- Fig. 4: einen vergrößerten Ausschnitt aus Figur 3 in einer schematischen Darstellung,
- Fig. 5: einen Schaltplan von Sensorelementen einer Sensoreinheit des Lebensmittelzubereitungssystems in einer schematischen Darstellung und
- Fig. 6: den Schaltplan aus Figur 6 in einer anderen schematischen Darstellung.

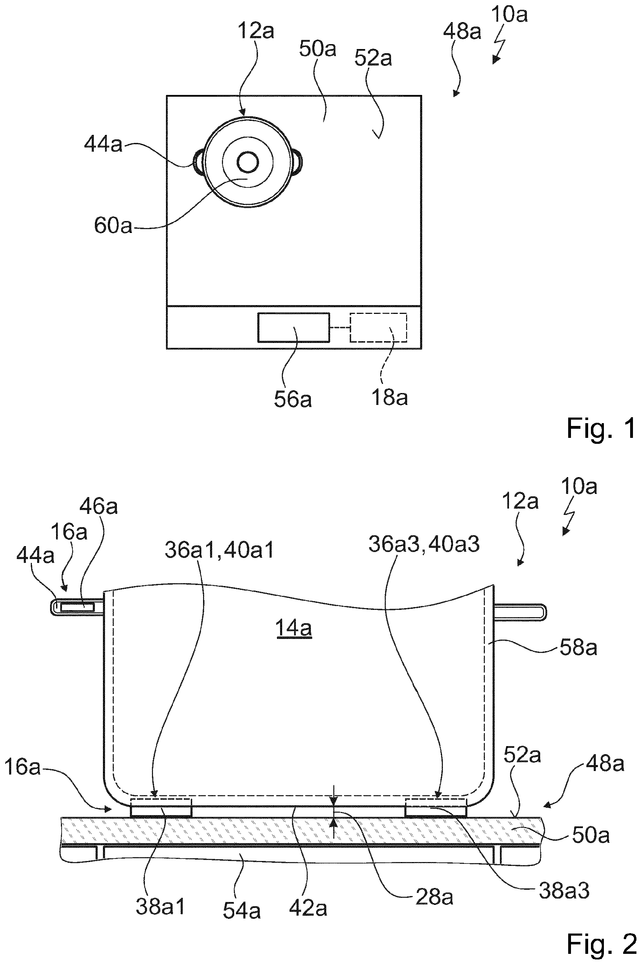

Figur 1 zeigt insbesondere ein Lebensmittelzubereitungssystem 10a, welches insbesondere ein Gargerät 48a aufweist. Das Gargerät 48a könnte beispielsweise zumindest ein Ofen, wie beispielsweise ein Herd und/oder ein Backofen, sein. Alternativ oder zusätzlich könnte das Gargerät 48a beispielsweise eine Mikrowelle und/oder ein Grillgerät und/oder ein Dampfgarer sein. Vorteilhaft ist das Gargerät 48a im vorliegenden Ausführungsbeispiel als ein Kochfeld ausgebildet. Das Gargerät 48a ist insbesondere als ein Induktionsgargerät ausgebildet. Insbesondere ist das Gargerät 48a im vorliegenden Ausführungsbeispiel als ein Induktionskochfeld ausgebildet. Vorteilhaft ist das Lebensmittelzubereitungssystem 10a im vorliegenden Ausführungsbeispiel als ein Kochsystem ausgebildet.

Das Gargerät 48a weist insbesondere zumindest eine und vorteilhaft genau eine Geräteplatte 50a auf. Im vorliegenden Ausführungsbeispiel ist die Geräteplatte 50a insbesondere als eine Aufstellplatte und vorteilhaft als eine Kochfeldplatte ausgebildet. In wenigstens einem montierten Zustand bildet die Geräteplatte 50a insbesondere einen Teil eines Geräteaußengehäuses, insbesondere eines Kochfeldaußengehäuses, aus, und zwar insbesondere eines Geräteaußengehäuses insbesondere des Gargeräts 48a und vorteilhaft eines Kochfeldaußengehäuses insbesondere des Kochfelds. Die Geräteplatte 50a ist im vorliegenden Ausführungsbeispiel insbesondere zu einem Aufstellen von Gargeschirr 12a vorgesehen.

Das Lebensmittelzubereitungssystem 10a weist insbesondere zumindest eine Heizeinheit 54a auf (vgl. Figur 2). Im vorliegenden Ausführungsbeispiel weist das Lebensmittelzubereitungssystem 10a insbesondere eine Vielzahl an Heizeinheiten 54a auf. Im Folgenden wird lediglich eine der Heizeinheiten 54a beschrieben. Die Heizeinheit 54a ist in einer Einbaulage insbesondere unterhalb der Geräteplatte 50a angeordnet. In wenigstens einem montierten Zustand ist die Heizeinheit 54a insbesondere in dem Gargerät 48a, vorteilhaft in dem Kochfeld, integriert. Die Heizeinheit 54a ist insbesondere dazu vorgesehen, auf der Geräteplatte 50a oberhalb der Heizeinheit 54a aufgestelltes Gargeschirr 12a zu erhitzen. Das Gargerät 48a, insbesondere das Kochfeld, weist insbesondere die Heizeinheit 54a auf.

Das Lebensmittelzubereitungssystem 10a weist insbesondere zumindest eine und vorteilhaft genau eine Bedienerschnittstelle 56a auf (vgl. Figur 1). Die Bedienerschnittstelle 56a ist insbesondere zu einer Eingabe und/oder Auswahl von Betriebsparametern vorgesehen, wie beispielsweise einer Heizleistung und/oder einer Heizleistungsdichte und/oder einer Heizzone. Die Bedienerschnittstelle 56a ist insbesondere zu einer Ausgabe, beispielsweise zu einer akustischen Ausgabe und vorteilhaft zu einer optischen Ausgabe, zumindest eines Betriebsparameters und/oder zumindest eines Werts eines Betriebsparameters, insbesondere an einen Bediener, vorgesehen. In wenigstens einem montierten Zustand ist die Bedienerschnittstelle 56a insbesondere in dem Gargerät 48a, vorteilhaft in dem Kochfeld, integriert. Das Gargerät 48a, insbesondere das Kochfeld, weist insbesondere die Bedienerschnittstelle 56a auf.

Alternativ könnte die Bedienerschnittstelle 56a beispielsweise teilweise in dem Gargerät 48a und/oder insbesondere teilweise in zumindest einem Mobilgerät des Lebensmittelzubereitungssystems 10a und/oder insbesondere teilweise in dem Gargeschirr 12a integriert sein.

Das Lebensmittelzubereitungssystem 10a weist insbesondere zumindest eine und vorteilhaft genau eine Steuereinheit 18a auf. Die Steuereinheit 18a ist insbesondere dazu vorgesehen, in Abhängigkeit von mittels der Bedienerschnittstelle 56a eingegebener Betriebsparameter Aktionen auszuführen und/oder Einstellungen zu verändern. Die Steuereinheit 18a regelt in wenigstens einem Betriebszustand insbesondere eine Energiezufuhr zu der Heizeinheit 54a. In wenigstens einem montierten Zustand ist die Steuereinheit 18a insbesondere in dem Gargerät 48a, vorteilhaft in dem Kochfeld, integriert. Das Gargerät 48a, insbesondere das Kochfeld, weist insbesondere die Steuereinheit 18a auf.

Die Steuereinheit 18a ist, insbesondere mittels der Heizeinheit 54a, insbesondere zu einer Beheizung des Gargeschirrs 12a vorgesehen. Das Lebensmittelzubereitungssystem 10a weist insbesondere zumindest ein Gargeschirr 12a, vorteilhaft das Gargeschirr 12a, auf. Das Gargeschirr 12a weist insbesondere zumindest einen Lebensmittelaufnahmeraum 14a zu einer Aufnahme zumindest eines Lebensmittels auf (vgl. Figur 2). Insbesondere begrenzt das Gargeschirr 12a zumindest einen Lebensmittelaufnahmeraum 14a, insbesondere den Lebensmittelaufnahmeraum 14a, zu einer Aufnahme des Lebensmittels wenigstens teilweise, insbesondere wenigstens zu einem Großteil, vorteilhaft wenigstens im Wesentlichen und besonders vorteilhaft vollständig.

Das Gargeschirr 12a ist insbesondere zu einem Aufstellen auf der Geräteplatte 50a vorgesehen, und zwar insbesondere an einer beliebigen Position zumindest einer von der Geräteplatte 50a definierten Kochfläche 52a, insbesondere des Kochfelds. Das Gargeschirr 12a ist insbesondre zu einer induktiven Beheizung vorgesehen, und zwar insbesondere durch die, insbesondere als Induktionsheizeinheit ausgebildete, Heizeinheit 54a. Insbesondere beheizt die Heizeinheit 54a das Gargeschirr 12a in dem Betriebszustand induktiv.

Insbesondere weist das Gargeschirr 12a zumindest einen Gargeschirrgrundkörper 58a auf. Der Gargeschirrgrundkörper 58a begrenzt den Lebensmittelaufnahmeraum 14a insbesondere wenigstens teilweise. Das Gargeschirr 12a weist insbesondere zumindest einen Gargeschirrdeckel 60a auf (vgl. Figur 1). Der Gargeschirrdeckel 60a ist insbesondere dem Gargeschirrgrundkörper 58a zugeordnet. Insbesondere begrenzt der Gargeschirrdeckel 60a in dem Betriebszustand den Lebensmittelaufnahmeraum 14a wenigstens teilweise. In dem Betriebszustand begrenzt das Gargeschirr 12a, insbesondere der Gargeschirrgrundkörper 58a und der Gargeschirrdeckel 60a, den Lebensmittelaufnahmeraum 14a insbesondere wenigstens zu einem Großteil, vorteilhaft wenigstens im Wesentlichen und besonders vorteilhaft vollständig.

Das Lebensmittelzubereitungssystem 10a weist insbesondere zumindest eine und vorteilhaft genau eine Sensoreinheit 16a auf. Die Sensoreinheit 16a ist zu einer Detektion zumindest einer Gewichtskenngröße vorgesehen, und zwar insbesondere zumindest einer Gewichtskenngröße des in dem Lebensmittelaufnahmeraum 14a befindlichen Lebensmittels. Insbesondere detektiert die Sensoreinheit 16a in dem Betriebszustand die Gewichtskenngröße, insbesondere des in dem Lebensmittelaufnahmeraum 14a befindlichen Lebensmittels.

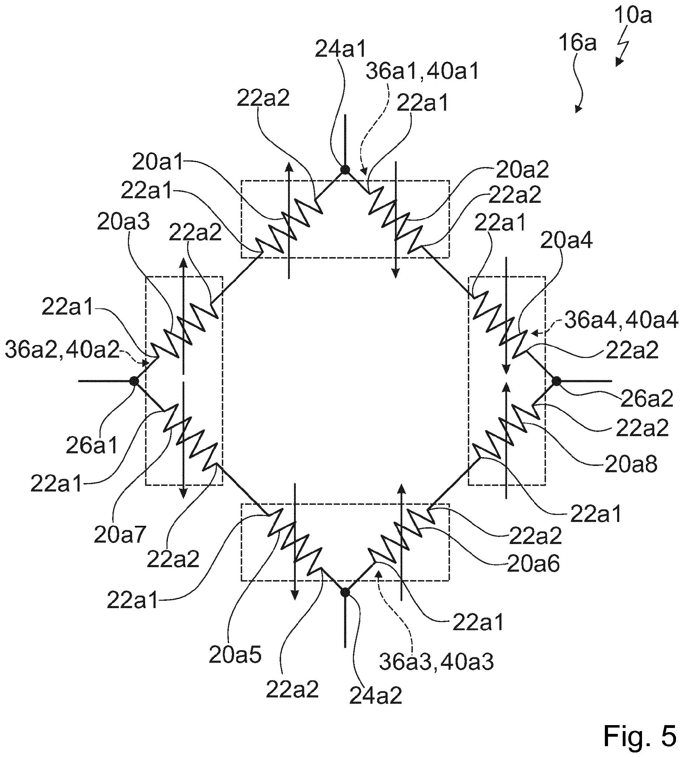

Insbesondere weist die Sensoreinheit 16a zumindest ein erstes Sensorelement 20a1 und zumindest ein zweites Sensorelement 20a2 auf (vgl. Figur 5). Das erste Sensorelement 20a1 ist insbesondere zu der wenigstens teilweisen Detektion der Gewichtskenngröße vorgesehen. In dem Betriebszustand detektiert das erste Sensorelement 20a1 die Gewichtskenngröße insbesondere wenigstens teilweise. Das zweite Sensorelement 20a2 ist insbesondere zu der wenigstens teilweisen Detektion der Gewichtskenngröße vorgesehen. In dem Betriebszustand detektiert das zweite Sensorelement 20a2 die Gewichtskenngröße insbesondere wenigstens teilweise.

Insbesondere weist die Sensoreinheit 16a zumindest ein drittes Sensorelement 20a3 und zumindest ein viertes Sensorelement 20a4 auf. Das dritte Sensorelement 20a3 ist insbesondere zu der wenigstens teilweisen Detektion der Gewichtskenngröße vorgesehen. In dem Betriebszustand detektiert das dritte Sensorelement 20a3 die Gewichtskenngröße insbesondere wenigstens teilweise. Das vierte Sensorelement 20a4 ist insbesondere zu der wenigstens teilweisen Detektion der Gewichtskenngröße vorgesehen. In dem Betriebszustand detektiert das vierte Sensorelement 20a4 die Gewichtskenngröße insbesondere wenigstens teilweise.

Insbesondere weist die Sensoreinheit 16a zumindest ein fünftes Sensorelement 20a5 und zumindest ein sechstes Sensorelement 20a6 auf (vgl. Figur 5). Das fünfte Sensorelement 20a5 ist insbesondere zu der wenigstens teilweisen Detektion der Gewichtskenngröße vorgesehen. In dem Betriebszustand detektiert das fünfte Sensorelement 20a5 die Gewichtskenngröße insbesondere wenigstens teilweise. Das sechste Sensorelement 20a6 ist insbesondere zu der wenigstens teilweisen Detektion der Gewichtskenngröße vorgesehen. In dem Betriebszustand detektiert das sechste Sensorelement 20a6 die Gewichtskenngröße insbesondere wenigstens teilweise.

Insbesondere weist die Sensoreinheit 16a zumindest ein siebtes Sensorelement 20a7 und zumindest ein achtes Sensorelement 20a8 auf. Das siebte Sensorelement 20a7 ist insbesondere zu der wenigstens teilweisen Detektion der Gewichtskenngröße vorgesehen. In dem Betriebszustand detektiert das siebte Sensorelement 20a7 die Gewichtskenngröße insbesondere wenigstens teilweise. Das achte Sensorelement 20a8 ist insbesondere zu der wenigstens teilweisen Detektion der Gewichtskenngröße vorgesehen. In dem Betriebszustand detektiert das achte Sensorelement 20a8 die Gewichtskenngröße insbesondere wenigstens teilweise.

Von den Sensorelementen 20a werden im Folgenden insbesondere lediglich das erste Sensorelement 20a1 und das zweite Sensorelement 20a2 und das dritte Sensorelement 20a3 und das vierte Sensorelement 20a4 beschrieben.

Die Sensoreinheit 16a weist insbesondere eine Brückenschaltung auf. Die Brückenschaltung ist insbesondere als Wheatstone'sche Brückenschaltung ausgebildet und/oder bezeichnet. In wenigstens einem Betriebszustand sind die Sensorelemente 20a insbesondere in der Brückenschaltung angeordnet.

Die Brückenschaltung weist insbesondere zumindest einen ersten elektrischen Energieanschluss 24a1 und zumindest einen zweiten elektrischen Energieanschluss 24a2 auf. In wenigstens einem Betriebszustand ist insbesondere an den ersten elektrischen Energieanschluss 24a1 und an den zweiten elektrischen Energieanschluss 24a2 zumindest eine elektrische Energiequelle (nicht dargestellt) angeschlossen. Beispielsweise könnte im vorliegenden Ausführungsbeispiel an dem ersten elektrischen Energieanschluss 24a1 eine positive Spannung und an dem zweiten elektrischen Energieanschluss 24a2 eine negative Spannung anliegen.

Die Brückenschaltung weist insbesondere zumindest einen ersten elektrischen Messanschluss 26a1 und zumindest einen zweiten elektrischen Messanschluss 26a2 auf. In wenigstens einem Betriebszustand ist insbesondere an den ersten elektrischen Messanschluss 26a1 und an den zweiten elektrischen Messanschluss 26a2 zumindest eine elektrische Ausleseeinheit (nicht dargestellt) der Sensoreinheit 16a angeschlossen. Die Ausleseeinheit könnte beispielsweise ein Voltmeter aufweisen.

Insbesondere sind das erste Sensorelement 20a1 und das zweite Sensorelement 20a2 in verschiedenen Brückenzweigen der Brückenschaltung angeordnet. Das dritte Sensorelement 20a3 und das vierte Sensorelement 20a4 sind insbesondere in verschiedenen Brückenzweigen der Brückenschaltung angeordnet.

Insbesondere sind das erste Sensorelement 20a1 und das dritte Sensorelement 20a3 in demselben Brückenzweig der Brückenschaltung angeordnet. Das zweite Sensorelement 20a2 und das vierte Sensorelement 20a4 sind insbesondere in demselben Brückenzweig der Brückenschaltung angeordnet.

Die Sensorelemente 20a sind insbesondere wenigstens zu einem Großteil und vorteilhaft vollständig identisch ausgebildet. Insbesondere weist zumindest eines der, insbesondere wenigstens ein Großteil der und vorteilhaft jedes der, Sensorelemente 20a zumindest einen Dehnungsmessstreifen auf.

Zumindest eines der, insbesondere wenigstens ein Großteil der und vorteilhaft jedes der, Sensorelemente 20a weist insbesondere zumindest einen ersten elektrischen Kontakt 22a und zumindest einen zweiten elektrischen Kontakt 22a auf. Insbesondere weist das erste Sensorelement 20a1 zumindest einen ersten elektrischen Kontakt 22a1 und zumindest einen zweiten elektrischen Kontakt 22a2 auf. Das zweite Sensorelement 20a2 weist insbesondere zumindest einen ersten elektrischen Kontakt 22a1 und zumindest einen zweiten elektrischen Kontakt 22a2 auf.

Insbesondere weist das dritte Sensorelement 20a3 zumindest einen ersten elektrischen Kontakt 22a1 und zumindest einen zweiten elektrischen Kontakt 22a2 auf. Das vierte Sensorelement 20a4 weist insbesondere zumindest einen ersten elektrischen Kontakt 22a1 und zumindest einen zweiten elektrischen Kontakt 22a2 auf.

Insbesondere weist das fünfte Sensorelement 20a5 zumindest einen ersten elektrischen Kontakt 22a1 und zumindest einen zweiten elektrischen Kontakt 22a2 auf. Das sechste Sensorelement 20a6 weist insbesondere zumindest einen ersten elektrischen Kontakt 22a1 und zumindest einen zweiten elektrischen Kontakt 22a2 auf.

Insbesondere weist das siebte Sensorelement 20a7 zumindest einen ersten elektrischen Kontakt 22a1 und zumindest einen zweiten elektrischen Kontakt 22a2 auf. Das achte Sensorelement 20a8 weist insbesondere zumindest einen ersten elektrischen Kontakt 22a1 und zumindest einen zweiten elektrischen Kontakt 22a2 auf.

Besonders vorteilhaft sind zumindest zwei Sensorelemente 20a zwischen zumindest einem elektrischen Energieanschluss 24a und zumindest einem elektrischen Messanschluss 26a geschaltet und sind vorteilhaft elektrisch gleichgeschaltet. An zumindest einem ersten Kontakt 22a1 eines der Sensorelemente 20a liegt in wenigstens einem Betriebszustand insbesondere eine identische Polung, insbesondere dieselbe Polung, an als an zumindest einem ersten Kontakt 22a1 eines weiteren der Sensorelemente 20a. Insbesondere liegt in wenigstens einem Betriebszustand an zumindest einem zweiten Kontakt 22a2 eines der Sensorelemente 20a eine identische Polung, insbesondere dieselbe Polung, an als an zumindest einem zweiten Kontakt 22a2 eines weiteren der Sensorelemente 20a.

In dem Betriebszustand sind die, insbesondere gleichgeschalteten, Sensorelemente 20a, insbesondere bei Anwesenheit des Lebensmittels in dem Lebensmittelaufnahmeraum 14a, insbesondere jeweils gemeinsam zumindest einer identischen Kraft, insbesondere zumindest einer Tensionskraft oder zumindest einer Kompressionskraft, welche insbesondere jeweils durch das in dem Lebensmittelaufnahmeraum 14a befindliche Lebensmittel hervorgerufen ist, ausgesetzt. Beispielsweise könnten in dem Betriebszustand die, insbesondere gleichgeschalteten, Sensorelemente 20a, insbesondere bei Anwesenheit des Lebensmittels in dem Lebensmittelaufnahmeraum 14a, insbesondere in Abhängigkeit von der identischen Kraft, jeweils analog auf die identische Kraft reagieren und sich insbesondere jeweils ausdehnen oder zusammenziehen.

In Figur 5 sind Sensorelemente 20a, welche zumindest einer Tensionskraft ausgesetzt sind, mit einem Pfeil nach oben und Sensorelemente 20a, welche zumindest einer Kompressionskraft ausgesetzt sind, mit einem Pfeil nach unten versehen.

Das erste Sensorelement 20a1 und das dritte Sensorelement 20a3 sind insbesondere zwischen dem ersten elektrischen Energieanschluss 24a1 und dem ersten elektrischen Messanschluss 26a1 geschaltet. Im vorliegenden Ausführungsbeispiel sind das erste Sensorelement 20a1 und das dritte Sensorelement 20a3 in dem Betriebszustand insbesondere jeweils zumindest einer, insbesondere identischen, Kompressionskraft ausgesetzt und ziehen sich, insbesondere bei Anwesenheit des Lebensmittels in dem Lebensmittelaufnahmeraum 14a, insbesondere in Abhängigkeit von der, insbesondere identischen, Kompressionskraft jeweils analog zusammen.

Insbesondere sind das zweite Sensorelement 20a2 und das vierte Sensorelement 20a4 zwischen dem ersten elektrischen Energieanschluss 24a1 und dem zweiten elektrischen Messanschluss 26a2 geschaltet. Im vorliegenden Ausführungsbeispiel sind das zweite Sensorelement 20a2 und das vierte Sensorelement 20a4 in dem Betriebszustand insbesondere jeweils zumindest einer, insbesondere identischen, Tensionskraft ausgesetzt und dehnen sich, insbesondere bei Anwesenheit des Lebensmittels in dem Lebensmittelaufnahmeraum 14a, insbesondere in Abhängigkeit von der, insbesondere identischen, Tensionskraft jeweils analog aus.

Das fünfte Sensorelement 20a5 und das siebte Sensorelement 20a7 sind insbesondere zwischen dem zweiten elektrischen Energieanschluss 24a2 und dem ersten elektrischen Messanschluss 26a1 geschaltet. Im vorliegenden Ausführungsbeispiel sind das fünfte Sensorelement 20a5 und das siebte Sensorelement 20a7 in dem Betriebszustand insbesondere jeweils zumindest einer, insbesondere identischen, Tensionskraft ausgesetzt und dehnen sich, insbesondere bei Anwesenheit des Lebensmittels in dem Lebensmittelaufnahmeraum 14a, insbesondere in Abhängigkeit von der, insbesondere identischen, Tensionskraft jeweils analog aus.

Insbesondere sind das sechste Sensorelement 20a6 und das achte Sensorelement 20a8 zwischen dem zweiten elektrischen Energieanschluss 24a2 und dem zweiten elektrischen Messanschluss 26a2 geschaltet. Im vorliegenden Ausführungsbeispiel sind das sechste Sensorelement 20a6 und das achte Sensorelement 20a8 in dem Betriebszustand insbesondere jeweils zumindest einer, insbesondere identischen, Kompressionskraft ausgesetzt und ziehen sich, insbesondere bei Anwesenheit des Lebensmittels in dem Lebensmittelaufnahmeraum 14a, insbesondere in Abhängigkeit von der, insbesondere identischen, Kompressionskraft jeweils analog zusammen.

Jeweils zwei der Sensorelemente 20a sind in dem Betriebszustand insbesondere in gegenseitigem Abstand von maximal 10 cm angeordnet. Beispielsweise könnten jeweils zwei der Sensorelemente 20a in dem Betriebszustand insbesondere in gegenseitigem Abstand von maximal und/oder wenigstens im Wesentlichen 2 cm angeordnet sein. Unter "wenigstens im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts beträgt.

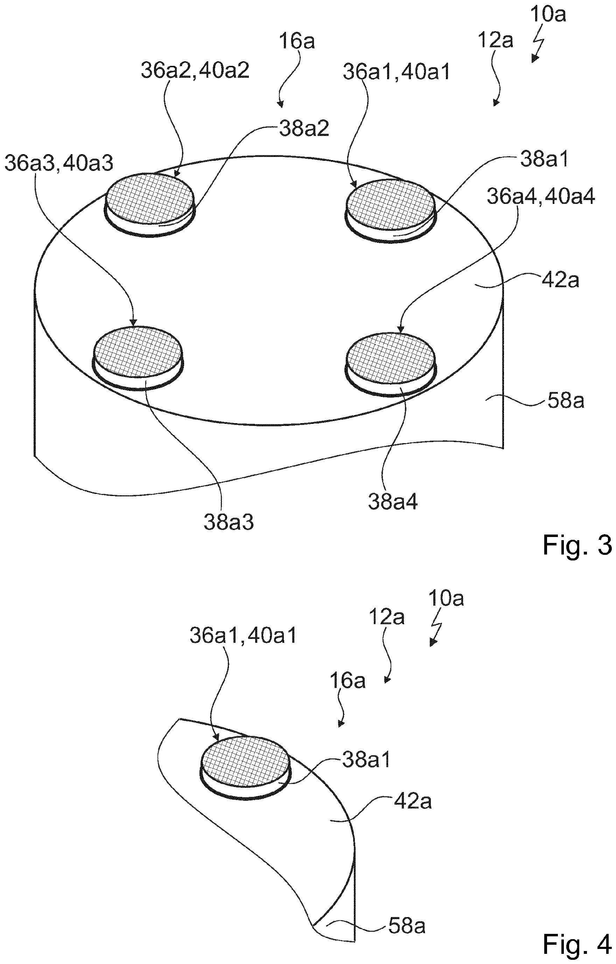

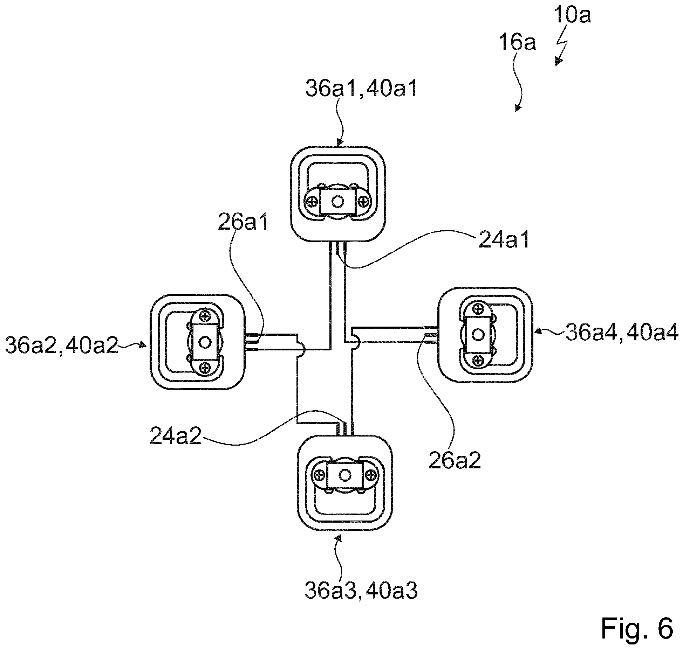

Die Sensorelemente 20a, welche insbesondere in gegenseitigem Abstand von maximal 10 cm angeordnet sind, bilden insbesondere zumindest eine Messeinheit 36a der Sensoreinheit 16a (vgl. Figuren 2 bis 6). Insbesondere weist die Sensoreinheit 16a zumindest eine Messeinheit 36a, insbesondere zumindest zwei, vorteilhaft zumindest drei und vorzugsweise zumindest vier Messeinheiten 36a auf. Eine Anzahl an Sensorelementen 20a ist insbesondere wenigstens im Wesentlichen und vorteilhaft genau doppelt so groß wie eine Anzahl an Messeinheiten 36a.

Insbesondere sind das erste Sensorelement 20a1 und das zweite Sensorelement 20a2 in gegenseitigem Abstand von maximal 10 cm angeordnet und bilden insbesondere zumindest eine, insbesondere erste, Messeinheit 36a1 der Sensoreinheit 16a. Das dritte Sensorelement 20a3 und das siebte Sensorelement 20a7 sind insbesondere in gegenseitigem Abstand von maximal 10 cm angeordnet und bilden insbesondere zumindest eine, insbesondere zweite, Messeinheit 36a2 der Sensoreinheit 16a.

Insbesondere sind das fünfte Sensorelement 20a5 und das sechste Sensorelement 20a6 in gegenseitigem Abstand von maximal 10 cm angeordnet und bilden insbesondere zumindest eine, insbesondere dritte, Messeinheit 36a3 der Sensoreinheit 16a. Das vierte Sensorelement 20a4 und das achte Sensorelement 20a8 sind insbesondere in gegenseitigem Abstand von maximal 10 cm angeordnet und bilden insbesondere zumindest eine, insbesondere vierte, Messeinheit 36a4 der Sensoreinheit 16a.

Die Sensorelemente 20a, welche insbesondere in gegenseitigem Abstand von maximal 10 cm angeordnet sind, sind insbesondere in einer gemeinsamen Sensorgehäuseeinheit 38a der Sensoreinheit 16a angeordnet. Insbesondere weist die Sensoreinheit 16a zumindest eine Sensorgehäuseeinheit 38a, insbesondere zumindest zwei, vorteilhaft zumindest drei und vorzugsweise zumindest vier Sensorgehäuseeinheiten 38a auf. Eine Anzahl an Sensorelementen 20a ist insbesondere wenigstens im Wesentlichen und vorteilhaft genau doppelt so groß wie eine Anzahl an Sensorgehäuseeinheiten 38a.

Jeweils eine der Messeinheiten 36a ist insbesondere wenigstens zu einem Großteil in einer der Sensorgehäuseeinheiten 38a integriert. Insbesondere ist die, insbesondere erste, Messeinheit 36a1 wenigstens zu einem Großteil in zumindest einer, insbesondere ersten, Sensorgehäuseeinheit 38a1 integriert. Die, insbesondere zweite, Messeinheit 36a2 ist insbesondere wenigstens zu einem Großteil in zumindest einer, insbesondere zweiten, Sensorgehäuseeinheit 38a2 integriert. Insbesondere ist die, insbesondere dritte, Messeinheit 36a3 wenigstens zu einem Großteil in zumindest einer, insbesondere dritten, Sensorgehäuseeinheit 38a3 integriert. Die, insbesondere vierte, Messeinheit 36a4 ist insbesondere wenigstens zu einem Großteil in zumindest einer, insbesondere vierten, Sensorgehäuseeinheit 38a4 integriert. Im Folgenden wird lediglich eine der Sensorgehäuseeinheiten 38a beschrieben.

Insbesondere weist die Sensoreinheit 16a zumindest eine Temperaturausgleichseinheit 40a, insbesondere zumindest zwei, vorteilhaft zumindest drei und vorzugsweise zumindest vier Temperaturausgleichseinheiten 40a auf. Im Folgenden wird lediglich eine der Temperaturausgleichseinheiten 40a beschrieben. In dem Betriebszustand gleicht die Temperaturausgleichseinheit 40a bei der Detektion der Gewichtskenngröße insbesondere zumindest einen Einfluss einer Temperatur aus.

Die Temperaturausgleichseinheit 40a weist insbesondere zumindest zwei Sensorelemente 20a der Sensoreinheit 16a auf. Die Sensorelemente 20a der Temperaturausgleichseinheit 40a sind insbesondere entgegengesetzt geschaltet. Insbesondere weist eine, insbesondere erste, Temperaturausgleichseinheit 40a1 das erste Sensorelement 20a1 und das zweite Sensorelement 20a2 auf. Eine, insbesondere zweite, Temperaturausgleichseinheit 40a2 weist insbesondere das dritte Sensorelement 20a3 und das siebte Sensorelement 20a7 auf. Insbesondere weist eine, insbesondere dritte, Temperaturausgleichseinheit 40a3 das fünfte Sensorelement 20a5 und das sechste Sensorelement 20a6 auf. Eine, insbesondere vierte, Temperaturausgleichseinheit 40a4 weist insbesondere das vierte Sensorelement 20a4 und das achte Sensorelement 20a8 auf.

Eine Anzahl an Sensorelementen 20a ist insbesondere wenigstens im Wesentlichen und vorteilhaft genau doppelt so groß wie eine Anzahl an Temperaturausgleichseinheiten 40a.

Insbesondere sind die, insbesondere erste, Messeinheit 36a1 und die, insbesondere erste, Temperaturausgleichseinheit 40a1 wenigstens teilweise einstückig ausgebildet.

Die, insbesondere zweite, Messeinheit 36a2 und die, insbesondere zweite, Temperaturausgleichseinheit 40a2 sind insbesondere wenigstens teilweise einstückig ausgebildet. Insbesondere sind die, insbesondere dritte, Messeinheit 36a3 und die, insbesondere dritte, Temperaturausgleichseinheit 40a3 wenigstens teilweise einstückig ausgebildet. Die, insbesondere vierte, Messeinheit 36a4 und die, insbesondere vierte, Temperaturausgleichseinheit 40a4 sind insbesondere wenigstens teilweise einstückig ausgebildet.

In dem Betriebszustand lagert die Sensorgehäuseeinheit 38a das Gargeschirr 12a, insbesondere den Gargeschirrboden 42a des Gargeschirrs 12a, beabstandet zu der Geräteplatte 50a (vgl. Figur 2). Insbesondere lagert die Sensorgehäuseeinheit 38a das Gargeschirr 12a, insbesondere den Gargeschirrboden 42a des Gargeschirrs 12a, in dem Betriebszustand in einem Abstand 28a von maximal 2 mm zu der Geräteplatte 50a. Die Sensorgehäuseeinheit 38a lagert das Gargeschirr 12a, insbesondere den Gargeschirrboden 42a des Gargeschirrs 12a, in dem Betriebszustand insbesondere in einem Abstand 28a von mindestens 0,5 mm zu der Geräteplatte 50a.

Insbesondere ist die Sensoreinheit 16a wenigstens teilweise in dem Gargeschirrboden 42a des Gargeschirrs 12a integriert. Beispielsweise könnte zumindest eine elektrische Verkabelung zwischen den Sensorelementen 20a in dem Gargeschirrboden 42a des Gargeschirrs 12a integriert sein. Insbesondere ist die Messeinheit 36a und/oder die Sensorgehäuseeinheit 38a und/oder die Temperaturausgleichseinheit 40a wenigstens teilweise in dem Gargeschirrboden 42a des Gargeschirrs 12a integriert.

Insbesondere zu einer Auswertung der Gewichtskenngröße, weist das Lebensmittelzubereitungssystem 10a zumindest eine Auswerteeinheit 46a auf (vgl. Figur 2). Die Auswerteeinheit 46a ist insbesondere zu einer Auswertung der Gewichtskenngröße vorgesehen. In dem Betriebszustand wertet die Auswerteeinheit 46a insbesondere die Gewichtskenngröße aus. Die Auswerteeinheit 46a ist insbesondere wenigstens zu einem Großteil und vorteilhaft vollständig in zumindest einem Gargeschirrgriff 44a des Gargeschirrs 12a integriert.

Die Steuereinheit 18a und die Auswerteeinheit 46a sind insbesondere zu einer, insbesondere drahtlosen, Kommunikation vorgesehen. Insbesondere weist die Auswerteeinheit 46a zumindest eine Kommunikationseinheit zu einer Kommunikation mit der Steuereinheit 18a und/oder mit der Sensoreinheit 16a auf (nicht dargestellt).

Insbesondere weist die Steuereinheit 18a zumindest eine Kommunikationseinheit zu einer Kommunikation mit der Auswerteeinheit 46a auf (nicht dargestellt). Beispielsweise könnte die Sensoreinheit 16a zumindest eine Kommunikationseinheit zu einer Kommunikation mit der Auswerteeinheit 46a aufweisen (nicht dargestellt).

Das Lebensmittelzubereitungssystem 10a könnte beispielsweise zumindest eine Versorgungseinheit aufweisen (nicht dargestellt), welche insbesondere zu einer Versorgung der Auswerteeinheit 46a und/oder der Sensoreinheit 16a mit Energie vorgesehen sein könnte. Die Versorgungseinheit könnte beispielsweise wenigstens teilweise, insbesondere wenigstens zu einem Großteil und vorteilhaft vollständig in dem Gargeschirr 12a integriert sein.

Beispielsweise könnte die Steuereinheit 18a in dem Betriebszustand, insbesondere einen Bediener, durch zumindest ein Rezept führen. Durch die Sensoreinheit 16a könnte insbesondere eine verbesserte Führung durch das Rezept und/oder eine verbesserte Handhabung mit zumindest einem interaktiven Rezept ermöglicht werden.

### Bezugszeichen

- 10: Lebensmittelzubereitungssystem
- 12: Gargeschirr
- 14: Lebensmittelaufnahmeraum
- 16: Sensoreinheit
- 18: Steuereinheit
- 20: Sensorelement
- 22: Elektrischer Kontakt
- 24: Elektrischer Energieanschluss
- 26: Elektrischer Messanschluss
- 28: Abstand
- 36: Messeinheit
- 38: Sensorgehäuseeinheit
- 40: Temperaturausgleichseinheit
- 42: Gargeschirrboden
- 44: Gargeschirrgriff
- 46: Auswerteeinheit
- 48: Gargerät
- 50: Geräteplatte
- 52: Kochfläche
- 54: Heizeinheit
- 56: Bedienerschnittstelle
- 58: Gargeschirrgrundkörper

## Patentansprüche

1. Lebensmittelzubereitungssystem, insbesondere Kochsystem, mit zumindest einem Gargeschirr (12a), welches zumindest einen Lebensmittelaufnahmeraum (14a) zu einer Aufnahme zumindest eines Lebensmittels wenigstens teilweise begrenzt und welches zu einer Beheizung durch ein Gargerät (48a) vorgesehen ist, **dadurch gekennzeichnet, dass** das Gargeschirr (12a) zumindest eine Sensoreinheit (16a) aufweist, welche zu einer Detektion zumindest einer Gewichtskenngröße vorgesehen ist.

2. Lebensmittelzubereitungssystem nach Anspruch 1, **dadurch gekennzeichnet, dass** die Sensoreinheit (16a) zumindest ein erstes Sensorelement (20a1) und zumindest ein zweites Sensorelement (20a2) aufweist, welche jeweils zu der wenigstens teilweisen Detektion der Gewichtskenngröße vorgesehen sind.

3. Lebensmittelzubereitungssystem nach Anspruch 2, **dadurch gekennzeichnet, dass** die Sensoreinheit (16a) zumindest eine Brückenschaltung aufweist, in welcher die Sensorelemente (20a) angeordnet sind.

4. Lebensmittelzubereitungssystem nach Anspruch 3, **dadurch gekennzeichnet, dass** das erste Sensorelement (20a1) und das zweite Sensorelement (20a2) in verschiedenen Brückenzweigen der Brückenschaltung angeordnet sind.

5. Lebensmittelzubereitungssystem nach einem der Ansprüche 2 bis 4, **dadurch gekennzeichnet, dass** die Sensoreinheit (16a) zumindest ein drittes Sensorelement (20a3) und zumindest ein viertes Sensorelement (20a4) aufweist, welche jeweils zu der wenigstens teilweisen Detektion der Gewichtskenngröße vorgesehen sind.

6. Lebensmittelzubereitungssystem zumindest nach den Ansprüchen 3 und 5, **dadurch gekennzeichnet, dass** das erste Sensorelement (20a1) und das dritte Sensorelement (20a3) in demselben Brückenzweig der Brückenschaltung angeordnet sind.

7. Lebensmittelzubereitungssystem nach einem der Ansprüche 2 bis 6, **dadurch gekennzeichnet, dass** die Sensorelemente (20a) wenigstens zu einem Großteil identisch ausgebildet sind.

8. Lebensmittelzubereitungssystem nach einem der Ansprüche 2 bis 7, **dadurch gekennzeichnet, dass** zumindest eines der Sensorelemente (20a) zumindest einen Dehnungsmessstreifen aufweist.

9. Lebensmittelzubereitungssystem nach einem der Ansprüche 2 bis 7, **dadurch gekennzeichnet, dass** zumindest zwei der Sensorelemente (20a) zumindest eine Messeinheit (36a) der Sensoreinheit (16a) bilden und in gegenseitigem Abstand von maximal 10 cm angeordnet sind.

10. Lebensmittelzubereitungssystem nach Anspruch 9, **dadurch gekennzeichnet, dass** die Sensoreinheit (16a) zumindest eine Sensorgehäuseeinheit (38a) aufweist, in welcher die Messeinheit (36a) wenigstens zu einem Großteil integriert ist.

11. Lebensmittelzubereitungssystem nach einem der vorhergehenden Ansprüche, **dadurch gekennzeichnet, dass** die Sensoreinheit (16a) zumindest eine Temperaturausgleichseinheit (40a) aufweist, welche dazu vorgesehen ist, bei der Detektion der Gewichtskenngröße zumindest einen Einfluss einer Temperatur auszugleichen.

12. Lebensmittelzubereitungssystem zumindest nach Anspruch 11, **dadurch gekennzeichnet, dass** die Temperaturausgleichseinheit (40a) zumindest zwei Sensorelemente (20a) der Sensoreinheit (16a) aufweist, welche entgegengesetzt geschaltet sind.

13. Lebensmittelzubereitungssystem nach einem der vorhergehenden Ansprüche, **dadurch gekennzeichnet, dass** die Sensoreinheit (16a) wenigstens teilweise in zumindest einem Gargeschirrboden (42a) des Gargeschirrs (12a) integriert ist.

14. Lebensmittelzubereitungssystem nach einem der vorhergehenden Ansprüche, **gekennzeichnet durch** zumindest eine Auswerteeinheit (46a), welche zu einer Auswertung der Gewichtskenngröße vorgesehen ist und welche wenigstens zu einem Großteil in zumindest einem Gargeschirrgriff (44a) des Gargeschirrs (12a) integriert ist.

15. Lebensmittelzubereitungssystem nach einem der vorhergehenden Ansprüche, **dadurch gekennzeichnet, dass** das Gargeschirr (12a) zu einer induktiven Beheizung vorgesehen ist.

## Claims

1. Food preparation system, in particular a cooking system, having at least one cooking utensil (12a), which at least partially delimits at least one food receiving space (14a) for holding at least one food and which is provided to be heated by a cooking appliance (48a), **characterised in that** the cooking utensil (12a) has at least one sensor unit (16a), which is provided to detect at least one weight parameter.

2. Food preparation system according to claim 1, **characterised in that** the sensor unit (16a) has at least one first sensor element (20a1) and at least one second sensor element (20a2), each being provided for the at least partial detection of the weight parameter.

3. Food preparation system according to claim 2, **characterised in that** the sensor unit (16a) has at least one bridge circuit, in which the sensor elements (20a) are arranged.

4. Food preparation system according to claim 3, **characterised in that** the first sensor element (20a1) and the second sensor element (20a2) are arranged in different bridge branches of the bridge circuit.

5. Food preparation system according to one of claims 2 to 4, **characterised in that** the sensor unit (16a) has at least one third sensor element (20a3) and at least one fourth sensor element (20a4), each being provided for the at least partial detection of the weight parameter.

6. Food preparation system at least according to claims 3 and 5, **characterised in that** the first sensor element (20a1) and the third sensor element (20a3) are arranged in the same bridge branch of the bridge circuit.

7. Food preparation system according to one of claims 2 to 6, **characterised in that** the sensor elements (20a) are configured at least largely identically.

8. Food preparation system according to one of claims 2 to 7, **characterised in that** at least one of the sensor elements (20a) has at least one strain gauge.

9. Food preparation system according to one of claims 2 to 7, **characterised in that** at least two of the sensor elements (20a) form at least one measurement unit (36a) of the sensor unit (16a) and are arranged at a mutual distance of maximum 10 cm.

10. Food preparation system according to claim 9, **characterised in that** the sensor unit (16a) has at least one sensor housing unit (38a), in which the measurement unit (36a) is at least largely integrated.

11. Food preparation system according to one of the preceding claims, **characterised in that** the sensor unit (16a) has at least one temperature equalisation unit (40a), which is provided to equalise at least one effect of a temperature during detection of the weight parameter.

12. Food preparation system at least according to claim 11, **characterised in that** the temperature equalisation unit (40a) includes at least two sensor elements (20a) of the sensor unit (16a), which are connected opposite one another.

13. Food preparation system according to one of the preceding claims, **characterised in that** the sensor unit (16a) is integrated at least partially in at least one cooking utensil base (42a) of the cooking utensil (12a).

14. Food preparation system according to one of the preceding claims, **characterised by** at least one evaluation unit (46a), which is provided to evaluate the weight parameter and which is integrated at least largely in at least one cooking utensil handle (44a) of the cooking utensil (12a).

15. Food preparation system according to one of the preceding claims, **characterised in that** the cooking utensil (12a) is provided for inductive heating.

## Revendications

1. Système de préparation d'aliments, en particulier système de cuisson, avec au moins une vaisselle de cuisson (12a) qui délimite au moins partiellement un espace de réception d'aliments (14a) pour recevoir au moins un aliment et qui est prévue pour être chauffée par un appareil de cuisson (48a), **caractérisé en ce que** la vaisselle de cuisson (12a) présente au moins une unité de capteur (16a) qui est prévue pour une détection d'au moins une valeur caractéristique de poids.

2. Système de préparation d'aliments selon la revendication 1, **caractérisé en ce que** l'unité de détection (16a) comprend au moins un premier élément de détection (20a1) et au moins un deuxième élément de détection (20a2), qui sont respectivement prévus pour la détection au moins partielle de la valeur caractéristique de poids.

3. Système de préparation d'aliments selon la revendication 2, **caractérisé en ce que** l'unité de détection (16a) présente au moins un circuit en pont dans lequel sont disposés les éléments de détection (20a).

4. Système de préparation d'aliments selon la revendication 3, **caractérisé en ce que** le premier élément de détection (20a1) et le deuxième élément de détection (20a2) sont disposés dans des branches de pont différentes du circuit en pont.

5. Système de préparation d'aliments selon l'une des revendications 2 à 4, **caractérisé en ce que** l'unité de détection (16a) comprend au moins un troisième élément de détection (20a3) et au moins un quatrième élément de détection (20a4), qui sont prévus respectivement pour la détection au moins partielle de la valeur caractéristique de poids.

6. Système de préparation d'aliments au moins selon les revendications 3 et 5, **caractérisé en ce que** le premier élément de détection (20a1) et le troisième élément de détection (20a3) sont disposés dans la même branche de pont du circuit en pont.

7. Système de préparation d'aliments selon l'une des revendications 2 à 6, **caractérisé en ce que** les éléments de détection (20a) sont identiques au moins pour une grande partie.

8. Système de préparation d'aliments selon l'une des revendications 2 à 7, **caractérisé en ce qu'**au moins l'un des éléments de détection (20a) comporte au moins une jauge de contrainte.

9. Système de préparation d'aliments selon l'une des revendications 2 à 7, **caractérisé en ce qu'**au moins deux des éléments de détection (20a) forment au moins une unité de mesure (36a) de l'unité de détection (16a) et sont disposés à une distance réciproque de 10 cm au maximum.

10. Système de préparation d'aliments selon la revendication 9, **caractérisé en ce que** l'unité de capteur (16a) présente au moins une unité de boîtier de capteur (38a) dans laquelle l'unité de mesure (36a) est intégrée au moins pour une grande partie.

11. Système de préparation d'aliments selon l'une des revendications précédentes, **caractérisé en ce que** l'unité de détection (16a) comprend au moins une unité de compensation de température (40a) prévue pour compenser au moins une influence d'une température lors de la détection de la valeur caractéristique de poids.

12. Système de préparation d'aliments au moins selon la revendication 11, **caractérisé en ce que** l'unité de compensation de température (40a) comprend au moins deux éléments de détection (20a) de l'unité de détection (16a), qui sont connectés en sens inverse.

13. Système de préparation d'aliments selon l'une quelconque des revendications précédentes, **caractérisé en ce que** l'unité de détection (16a) est au moins partiellement intégrée dans au moins un fond de vaisselle de cuisson (42a) de la vaisselle de cuisson (12a).

14. Système de préparation d'aliments selon l'une des revendications précédentes, **caractérisé par** au moins une unité d'évaluation (46a) qui est prévue pour une évaluation de la grandeur caractéristique de poids et qui est intégrée au moins en grande partie dans au moins une poignée de vaisselle de cuisson (44a) de la vaisselle de cuisson (12a).

15. Système de préparation d'aliments selon l'une des revendications précédentes, **caractérisé en ce que** la vaisselle de cuisson (12a) est prévue pour être chauffée par induction.
